# EUROPEAN PATENT APPLICATION

(11) **EP 1 188 986 A2**
(43) Date of publication of application: **20.03.2002**
(21) Application number: 01000448.9
(22) Date of filing: 12.09.2001
(51) Int. Cl.: F22G 7/14

(54) **Arrangement in recovery boiler**

(30) Priority: 18.09.2000 FI 20002055
(71) Applicant: Kvaerner Pulping Oy, 33100 Tampere (FI)
(72) Inventor: Salmela, Matti, 33900 Tampere (FI)
(74) Representative: Kaukonen, Juha Veikko

(57) **Abstract**

The invention relates to an arrangement in a recovery boiler (1) whose upper part comprises superheaters (7) and a flue gas channel (6) leading out therefrom, a first flue gas channel part (6a) being arranged vertically so that the flue gases flow to the channel part (6a) downward in the longitudinal direction.
The arrangement of the invention is characterized in that it comprises at least one superheater (T) located in the vertical flue channel part (6a) outside the furnace of the recovery boiler (1).

## Description

The invention relates to an arrangement in a recovery boiler comprising superheaters in the upper part of the recover boiler for recovering the heat in flue gases, and a flue gas channel for discharging the flue gases from the recovery boiler, a first flue gas channel part immediately following the recover boiler being arranged vertically, so that the flue gases flow downward in the longitudinal direction of said channel part.

The black liquor generated in pulp production is combusted in a recovery boiler at a pulp mill in order to recover the energy of combustible materials contained therein and recyclable chemicals. In a recovery boiler, heat is recovered by means of walls provided by its water pipes and other heat delivery surfaces. Heat delivery surfaces include superheaters in the furnace of the recovery boiler, feed water pre-heaters and a boiler bank, which are placed in a flue gas channel after the recovery boiler.

In modern recovery boilers, superheaters are placed in the upper part of the furnace. Flue gases flow in the upper part of a recovery boiler between superheater pipes substantially transversely to the superheater pipes, until they are discharged from the upper part of the recovery boiler to the side of the flue gas channel behind it. Due to the superheater sequence, the length of the upper part of the boiler in the flow direction of the flue gases towards the so-called Second pass of the flue gas channel may become quite extensive, particularly if high superheating temperatures are required. Since the angles of inclination of the so-called nose are quite constant due to flow reasons, the height of the upper part of the furnace also increases in order for the flow opening for flue gases flowing from the upper part to said Second pass would remain sufficiently large. The result of an excessively sized superheater area is that the risk of flue gas channelling in the superheater area increases thus impairing performance. Generally, in large boilers, the performance security risk, and the size of the boiler and the buildings increase significantly.

The object of the present invention is to provide an arrangement in a recovery boiler so as to enable a lower upper part in a recovery boiler than in previous solutions, more efficient heat recovery and to avoid the channelling of flue gases in the area of the superheaters more reliably than previously.

The recovery boiler of the invention is characterized in that the arrangement comprises at least one superheater located in said vertical flue channel part outside the furnace of the recovery boiler.

The essential idea of the invention is to place at least one superheater in the so-called Second pass, i.e. in the flue gas channel after the recovery boiler, in the longitudinal direction of the flue gas channel, i.e. as a so-called longitudinal superheater closer to the rear wall of the recovery heater, and to place the feed water pre-heaters and optional boiler banks thereafter further from the recovery boiler. This structure allows the superheater in the flue gas channel to be made longer in the flow direction of gas, increasing its heat recovery. Other superheaters remaining in the upper part of the furnace of the recovery boiler may in turn be shortened, whereby the upper part of the recovery boiler becomes lower. As a result, the recovery boiler and the boiler room can be made lower than previously, the flue gas heat transfer by means of superheaters becomes more efficient, and the shorter flow transversely to the superheaters also decreases the risk of channelling. Furthermore, the solution enables more reliable superheater dimensioning and generally significantly lower boiler investment costs. The essential idea of a preferred embodiment of the invention is to place a first, i.e. primary, superheater in the so-called Second pass as the last superheater in the flue gas flow direction, and, similarly, as the first in the flow direction of the steam flowing through the superheaters.

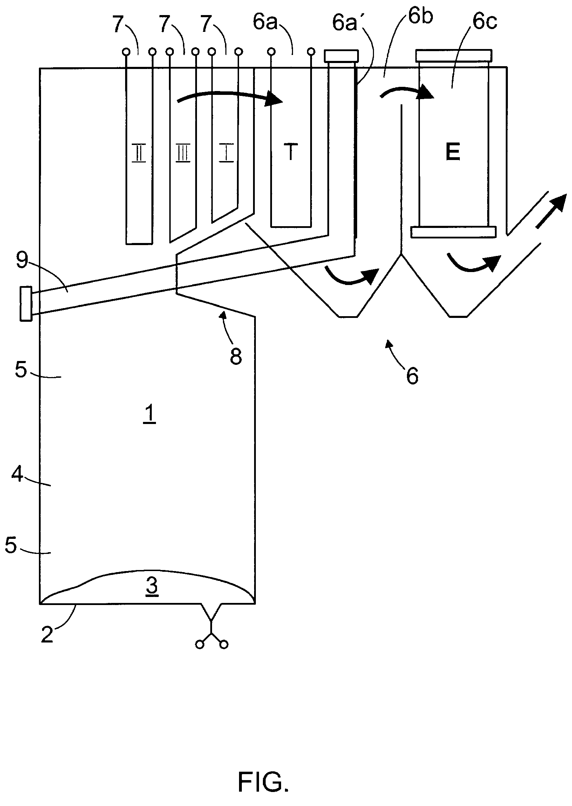

The invention is described in detail in the attached drawing, wherein the figure is a schematic sectional side view of a recovery boiler comprising the arrangement of the invention.

The figure is a schematic sectional side view of a recovery boiler comprising the arrangement of the invention. In the lower part of the recovery boiler 1, on a bottom 2, is a char bed 3, generated therein when the recovery boiler functions. The side of the recovery boiler is provided with liquor feed nozzles 4, via which black liquor is fed to the recovery boiler for combustion, and air nozzles 5, schematically shown in the vertical direction of the recovery boiler at different heights, for feeding combustion air into the recovery boiler, in a manner known per se, differently phased in order for the combustion to be implemented as efficiently as possible, causing minimal harmful emissions. The manner of operation of a recovery boiler per se, the feed of liquor and air, and the phasing of air are generally known per se to those skilled in the art, and, since they are not essentially related to the invention, they are not described in detail in this context. After the recovery boiler 1 is a flue gas channel 6, to which flue gases flow when leaving the recovery boiler. The flue gas channel 6 comprises a first channel part 6a, located after the recovery boiler such that the flue gas being discharged from the recovery boiler flows vertically downward in the first channel part 6a. Typically, this is followed by a second vertical channel part 6b, into which flue gases flowing from the lower end of the first channel part 6a turn and flow therein vertically upwards. Furthermore, the flow gas channel 6 typically comprises a third vertical channel part 6c, located after the second channel part 6b such that the flue gas flowing from the second channel part turns to flow vertically downward in the third channel part 6c. After the third channel part 6c the flue gas exits and is typically led to further processing.

The upper part of the recovery boiler 1 comprises superheaters 7, denoted by numbers I to III. The superheaters are usually specifically named, number I being usually a primary superheater, number II a secondary superheater, and number III a tertiary superheater. The order numbers of the superheaters are based on the idea that when the aim is to produce superheated steam, the water vaporized in the pipes of the recovery boiler is led through the superheaters, making the steam heat to a temperature of several hundreds of degrees. In order for this to take place in the desired manner, the steam is led to the primary superheater at a lower flue gas temperature, and from there onwards to the secondary and tertiary superheaters and from there out to be used. This enables optimal recovery of the heat of the flue gases as the hottest flue gas heats the steam in a last phase, and the cooling flue gas heats the steam at a lower temperature in the secondary and primary superheaters in a similar manner. The figure is a side view of the superheaters, showing as if only one superheater pipework. In practice, a superheater comprises several pipes in parallel, so that flue gases have to flow between the pipes warming them. Similarly, several superheater units may be arranged longitudinally in parallel in the recovery boiler. All of this is generally fully known per se and obvious to a person skilled in the art and therefore does not have to be described in more detail. Below the superheaters 7 is a so-called nose 8, used in all modern recovery boilers for controlling the flue gas flow in the upper part of the recovery boiler so that they flow to the superheaters and further through the superheaters as correctly as possible. In the upper part of the recovery boiler, flue gases flow transversely to the superheater pipes through superheaters provided by vertical superheater pipes, the superheaters acting as transverse superheaters. At the nose 8, below the superheaters 7, across the furnace of the recovery boiler, are located screen tubes 9 that thus extend behind the recovery boiler to the flue gas channel and provide therein a heat recovery pipework and preferably a rear wall 6a' in the first channel part 6a.

Immediately after the upper part of the recovery boiler, a superheater is installed in accordance with the invention in the flue gas channel in the first vertical channel part 6a, a primary superheater T in the case of the figure, which extends close to the screen tubes. When flue gases flow substantially in the upper part of the recovery boiler transversely to the superheater pipes of the superheaters I to III, they flow substantially in the direction of the superheater pipes of the superheater T at the superheater T in the flue gas channel, the primary superheater thus acting as a longitudinal superheater in the flue gas channel.

In accordance with a preferred embodiment of the invention, superheater T acts as the primary superheater, whereby the position and order of the superheaters denoted by numbers I to III for steam in the superheating chain can be selected suitable to achieve the desired operational entity.

After the second flue gas channel part 6b is a third flue gas channel part 6c, wherein flue gases again flow vertically downward to be discharged in a discharge channel from the lower end of the flue gas channel part 6c in a manner known per se. This downwards flowing flue gas channel part 6c further comprises a heat recovery element E, i.e. a so-called economizer for pre-heating the water to be fed to the recovery boiler with already quite cooled flue gases to improve the heat recovery characteristics etc. The use of such economizers and their placement in flue gas channels are known per se and fully known by and obvious to a person skilled in the art and therefore no detailed description is needed herein.

In the solution of the invention, the height between the nose 8 and the furnace roof remains significantly lower than usual, since not all superheaters have to be placed between the nose and the recovery boiler furnace roof. Accordingly, the height of the recovery boiler decreases significantly with respect to known solutions. In the vertical direction, the superheaters can be constructed shorter. Further, superheater T in the upper part of the recovery boiler can be made significantly longer than in known solutions, increasing its heat recovery capacity, thus improving the performance of the superheaters in the entire recovery boiler. As the furnace of the recovery boiler decreases, the height of the boiler room, and, accordingly, building and investment costs decrease significantly. The structure of the superheaters in the flue gas channel is any suitable structure per se, and the dimensioning and other details of the pipes may be implemented in manners known per se.

In the above description and drawing, the invention was described by way of example and is in no way limited thereto. It is essential that at least one superheater, preferably the primary superheater is located outside the furnace of the recovery boiler in the flue gas channel part following it, i.e. the so-called Second pass, so that is acts as a longitudinal superheater in the flue gas flow. It is naturally evident that superheater T in the flue gas channel also comprises several parallel superheater pipes transverse to the flue gas channel in a generally known manner, and optionally also several parallel superheater units without changing the essential idea of the invention.

## Claims

1. An arrangement in a recovery boiler comprising superheaters in the upper part of the recover boiler for recovering the heat in flue gases, and a flue gas channel for discharging the flue gases from the recovery boiler, a first flue gas channel part immediately following the recover boiler being arranged vertically, so that the flue gases flow downward in the longitudinal direction of said channel part, **characterized in that** the arrangement comprises at least one superheater located in said vertical flue channel part outside the furnace of the recovery boiler.

2. An arrangement as claimed in claim 1, **characterized in that** the superheater located in the flue gas channel acts as a primary superheater in the flow direction of the water and steam in the superheaters.

3. An arrangement as claimed in claim 1 or 2, **characterized in that** it comprises screen tubes transversely to the recovery boiler and located below the superheaters in the upper part of the recovery boiler, and that part of the rising pipes of the screen tubes provide the rear wall of said parallel flue gas channel.

4. An arrangement as claimed in any one of the preceding claims, **characterized in that**, after said vertical flue gas channel part, the flue gas channel comprises at least a second vertical flue gas channel part, located after said first flue gas channel part and being in connection thereto, whereby the flue gases flow from the first flue gas channel to the second flue gas channel part and flow therein upward in its longitudinal direction, and that at least one heat recovery element, i.e. a so-called economizer, is arranged in said second flue gas channel part.

5. An arrangement as claimed in any one of the preceding claims, **characterized in that**, after said second vertical flue gas channel part, the flue gas channel comprises at least a third vertical flue gas channel part, located after said second flue gas channel part and being in connection thereto, whereby the flue gases flow from the second flue gas channel to the third flue gas channel part, and flow therein downward in its longitudinal direction, and that at least one heat recovery element, i.e. a so-called economizer, is arranged in said third flue gas channel part.
